# EUROPEAN PATENT SPECIFICATION

(11) **EP 1 735 578 B1**
(45) Date of publication and mention of the grant of the patent: **07.11.2007**
(21) Application number: 05715505.3
(22) Date of filing: 24.02.2005
(51) Int. Cl.: F28F 19/06, F28F 21/08, C01B 21/12, C01C 1/04

(54) **APPARATUS FOR PROCESSING HIGHLY CORROSIVE AGENTS**
VORRICHTUNG ZUR VERARBEITUNG VON HOCHKORROSIVEN MITTELN
DISPOSITIF POUR LE TRAITEMENT D'AGENTS HAUTEMENT CORROSIFS

(30) Priority: 16.03.2004 EP 04006215
(43) Date of publication of application: 27.12.2006
(73) Proprietor: UREA CASALE S.A., 6900 Lugano-Besso (CH)
(72) Inventor: ROMITI, Domenico, CH-6900 Lugano (CH)
(74) Representative: Zardi, Marco
(86) International application number: PCT/EP2005/001934
(87) International publication number: WO 2005/095883

(56) References cited:
- EP-A- 0 965 410
- WO-A-02/099352
- WO-A-03/095060
- US-A- 4 899 813
- PATENT ABSTRACTS OF JAPAN vol. 0101, no. 07 (C-341), 22 April 1986 (1986-04-22) -& JP 60 238492 A (SUMITOMO KINZOKU KOGYO KK), 27 November 1985 (1985-11-27)

## Description

### Field of application

The present invention, in its most general aspect, refers to apparatuses intended for treating highly corrosive chemical agents, with respect to which a specialized, effective and long-lasting protection is required.

In particular, this invention concerns an apparatus of the aforementioned type, in which the treating of corrosive agents is substantially a heat-treating.

Yet more specifically, the present invention refers to an apparatus of the type considered, comprising or essentially consisting of a tube bundle heat exchanger, structured to carry out a heat exchange between two fluids one of which is highly corrosive.

Heat exchange apparatuses falling within the scope of protection of the present invention are, for example, synthesis, decomposition, condensation or evaporation reactors, stripping apparatuses, boilers, concentrators and similar devices that require the heat exchange between a process fluid and an operating fluid.

In particular, but not exclusively, the present invention concerns apparatuses that can be used in urea production plants, for the decomposition of ammonium carbamate into ammonia and carbon dioxide, also known as strippers, and, respectively, apparatuses for the condensation of ammonia and carbon dioxide into ammonium carbamate, also known as condensers.

For the sole purpose of simplifying the following description and claims, with the terms "tube bundle heat exchanger" or "tube bundle heat exchange apparatus", we intend to identify all of the aforementioned apparatuses.

### Prior art

It is known that heat exchange apparatuses of the type specified above operate, in an urea production plant, in critical operative conditions, normally of high pressure and high temperature of the process fluid and are therefore continuously subjected to high mechanical and thermal stresses. Such a tube bundle apparatus is, for example, disclosed in WO-A-03/095060.

Added to this, as well as such critical operative conditions, the process fluid often also exerts a corrosive and/or erosive action on the surfaces with which it comes into contact due, in particular, to the presence of highly corrosive agents.

The corrosive and/or erosive action reveals itself in particular at the tube bundle, and generally inside the tubes of which it is composed, of the stripping and condensation apparatuses present in the high pressure section of an urea production plant.

The tubes of the tube bundle of such heat exchange apparatuses (stripper and condenser) are, indeed, generally crossed on their inside by a process fluid that, in the case of urea, has, as main compounds, highly corrosive agents like ammonium carbamate and carbon dioxide. These substances exert an aggressive consumption and erosion action of the inner surfaces of such tubes with which they come into contact.

It follows from this that such apparatuses are seriously damaged already after short periods of operation, in some cases even after a few months of activity. This means having to shut down the whole urea production plant for their repair, but more frequently replacement with new apparatuses, with clear negative effects in terms of loss of production and maintenance costs. Moreover, frequent stopping and restarting of the plant can cause damage to the other apparatuses or their rapid wear, as well as additional energy consumption.

In order to try to avoid such drawbacks, heat exchange apparatuses of the type specified above have been proposed in the field, the tube bundle of which consists of stainless steel tubes, completely coated at their inner surface with a layer of zirconium.

However, despite the recognized effectiveness of zirconium coating against the chemical corrosion determined by the aforementioned agents, this type of apparatuses does not allow completely satisfactory results to be achieved.

Indeed, the well known "incompatibilities" of zirconium with stainless steel, as regards their close bonding through welding as well as their different physical properties in terms of resistance to mechanical stresses and thermal dilation, are such that in anti-corrosion coatings (zirconium/steel) of the heat exchange tubes according to the prior art, there is disbonding between the materials and therefore points and zones in which the desired coating is detached from the stainless steel tube. The process fluid thus manages to infiltrate into such "critical" zones and, since the steel tube is without protection, it is therefore thus subject to the corrosive attack of such a fluid, with consequent rapid and serious damage to the heat exchange apparatus.

It follows from this that, as well as being difficult to carry out due to the objective difficulty in realizing a zirconium coating on steel tube bundles, current heat exchangers of the type considered here are very onerous from the point of view of maintenance, requiring frequent checks and frequent repair interventions.

### Summary of the invention

The technical problem underlying the present invention is therefore that of providing a tube bundle heat exchange apparatus of the type specified above, that allows the quoted drawbacks with reference to the prior art to be overcome; in other words that allows an effective and long-lasting resistance against corrosive chemical agents treated in it to be ensured, that is easy to realize, reliable and that does not require frequent and onerous maintenance interventions.

Such a problem is solved by a tube bundle heat exchange apparatus of the type considered above, characterized in that said tube bundle comprises at least one titanium or titanium alloy tube, coated with a layer of zirconium or zirconium alloy.

Preferably, the titanium tube is internally coated with the layer of zirconium or zirconium alloy.

Preferably, the titanium or titanium alloy tube has a thickness between 1.0 and 10 mm, whereas the coating layer of zirconium or zirconium alloy has a thickness between 0.3 and 2.0 mm.

Again preferably, said at least one titanium or titanium alloy tube is only partially coated with the layer of zirconium or zirconium alloy, which, preferably, extends in such a tube starting from an end thereof, or close to an end thereof, for the entry of a process fluid, towards an opposite end thereof, for a portion between 5 and 30%.

Still preferably, the titanium or titanium alloy tube and the coating layer of zirconium or zirconium alloy are bonded together metallurgically, for example by hot-drawing, or through welding.

From the studies carried out by the Applicant, it has surprisingly been found that, contrary to the constant teaching of the prior art, by combining a zirconium coating with a titanium tube, the aforementioned drawbacks with reference to the prior art are advantageously overcome in a simple and effective manner.

In particular, the heat exchange tube according to the present invention, obtained by the titanium/zirconium combination, is extremely resistant both to the mechanical and thermal stresses and to the corrosive/erosive attack of the process fluids with which it comes into contact.

Moreover, thanks to the particular compatibility between these two metals and their similar chemical/physical properties, it is possible to firmly and long-lastingly bond the zirconium coating with the titanium tube. All of this using simple and conventional realization techniques and without the two metals, during the operation of the apparatus, tending to disbond or in any case coming under tension one with respect to the other, thus keeping the structural and anti-corrosive resistance of such materials unchanged through time and avoiding any type of laceration or crack of the coating layer.

Further characteristics and advantages of the invention shall be clear from the description made hereafter of an embodiment thereof, given for indicating and not limiting purposes, with reference to the attached drawing.

### Brief description of the drawing

In such a drawing:
- figure 1 schematically illustrates a section view of a tube bundle heat exchange apparatus according to the present invention;
- figure 2 schematically illustrates a section view of a detail of the apparatus of figure 1.

### Detailed description of an embodiment of the invention

With reference to the aforementioned figures, the heat exchange apparatus according to the invention shall be described, purely for indicating and not limiting purposes, with specific reference to a descending film tube bundle heat exchanger 10, with vertical tubes, that has advantageous and specific use as a stripper of a urea production plant, but it is clear that it can be used as a condenser, evaporator, boiler, reactor or similar apparatuses based upon the heat exchange between two fluids.

In particular, the heat exchanger 10 according to the invention has advantageous and specific use as a stripper or condenser in a high pressure synthesis section of an urea plant, and more precisely of a urea plant of so-called CO2 or ammonia stripping, not represented because it is conventional. Such a section generally comprises at least one synthesis reactor, a stripper for the decomposition of the ammonium carbamate and of the free ammonia present in the reaction mixture coming from the reactor, and a condenser for the condensation of vapors comprising carbon dioxide and ammonia coming from the stripper. These apparatuses are in fluid communication with each other so as to form a so-called substantially isobaric synthesis loop, i.e. operating at the same pressure usually between 140-170 bar.

The heat exchanger 10 comprises a shell 11, with a vertical axis A-A, closed at the opposite ends by respective walls or bottoms 12, 13, a tube bundle 14 (of which just one tube 14a is illustrated in the figures for the sake of simplicity), supported longitudinally in said shell 11, through tube plates 15, 16, upper and lower respectively, perimetrically fixed (for example welded) gas-tight to said shell 11.

Due to the presence of such tube plates 15, 16, in the shell 11 of said heat exchangers 10, three chambers are defined, arranged in axial sequence: a first chamber 17, between the upper bottom 12, and the outer wall 15a of the upper tube plate 15; a second chamber 18, between the tube plates 15 and 16 and a third chamber 19, between the outer wall 16a of the lower tube plate 16 and the lower bottom 13 of the shell 11.

For the sake of simplicity of explanation, with the term "outer wall of the tube plate", we mean to identify the wall of said tube plate facing towards the outside of the tube bundle.

The first chamber 18, or upper chamber, is in fluid communication with the outside of the apparatus 10, through an entry duct 20 of, for example, a process fluid, formed in the upper bottom 12, whereas the third chamber 19, or lower chamber, is in fluid communication with the outside through an exit duct 21 of the fluid, formed in the lower bottom 13.

In turn, the second chamber 18, or intermediate chamber, is in communication with the outside of the shell 11 through an upper duct 23, for the introduction into it of an operating heat exchange fluid, for example steam at a predetermined pressure and temperature, able to be used to carry out the desired heat exchange with the process fluid to be stripped; a lower duct 22 takes care of discharging the operating heat exchange fluid from said second chamber 18.

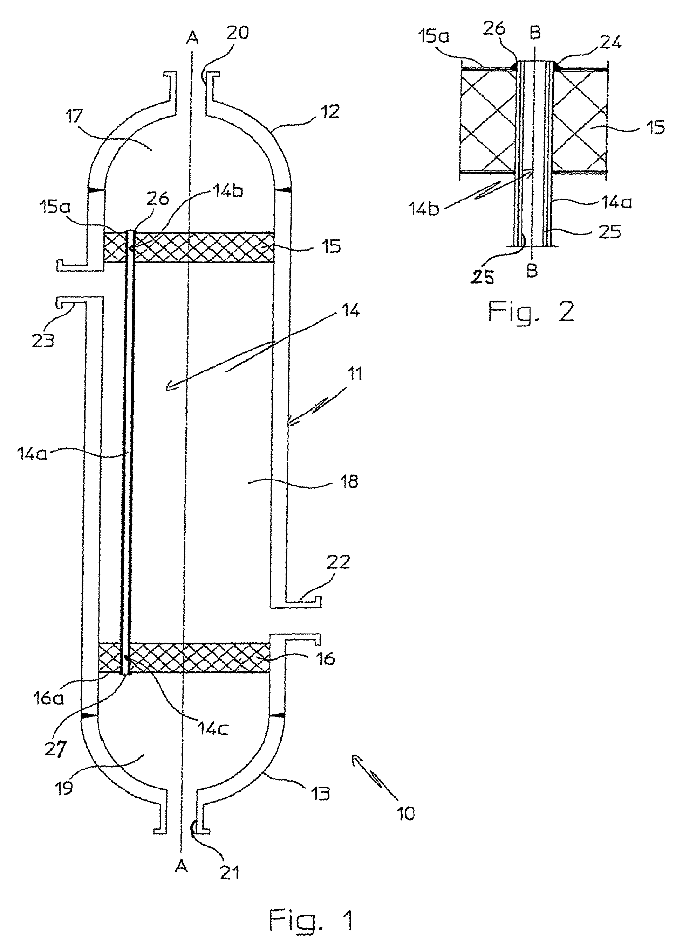

The tubes 14a of the tube bundle 14, have respective upper and lower end portions 14b, 14c, fixed for example through welding 24 as indicated in figure 2, in the corresponding tube plates 15 and 16, and are open in the first chamber 17 and in the third chamber 19, respectively, which are thus in mutual fluid communication.

Advantageously, in accordance with the present invention, the tubes 14a of the tube bundle 14 are made of titanium or titanium alloy and are coated with a layer 25 of zirconium or zirconium alloy. In the example of figure 2, such a coating layer 25 is inside the titanium or titanium alloy tubes 14, i.e. applied to the inner surface of such tubes. It goes without saying that in the cases in which the process fluid is made to flow outside of the tube bundle 14 (shell side), it is the outer surface of the titanium or titanium alloy tubes 14a that is advantageously coated according to the invention with the layer 25 of zirconium or zirconium alloy.

Preferably, the titanium used is titanium ASTM GR. 1-2-3-4-5-6-7- or equivalent, whereas the zirconium is of the ASTM GR. 60702/60704/60705 type, or equivalent.

Preferably, the titanium tube 14a also has a thickness between 2.0 and 5.0 mm, whereas the zirconium inner coating layer 25 has a thickness between 0.5 and 1.2 mm.

Advantageously, according to a preferred embodiment of the present invention, the zirconium coating 25 only partially covers the titanium heat exchange tube 14a. Preferably, such a coverage of the zirconium layer 25 is present solely at the upper end portion 14b of the heat exchange tube 14a, and in particular in the portion of the tube 14a immediately below the upper tube plate 15. Again preferably, the zirconium layer 25 extends in the tube 14a starting from an upper end 26 thereof for the entry of a process fluid, towards an opposite end 27 thereof, for a portion between 10 and 20%.

By doing so, an anticorrosion protective coating is realized in the heat exchanger 10 according to the invention solely in the critical points and zones of the tube bundle 14, where, from the studies carried out by the Applicant, the corrosive/erosive action of the process fluid is higher, in any case managing to ensure an effective and long-lasting resistance to corrosion also in the other parts of the tube bundle thanks to the arrangement of titanium or titanium alloy tubes.

It follows from this that the use of zirconium as coating material is drastically reduced with respect to the prior art, simplifying the application procedures of such a layer and at the same time obtaining a saving in realization costs of the present apparatus.

Of course, where the operating conditions and the type of operating fluid require it, the zirconium layer 25 can completely coat the inner surface of the tubes 14a of the tube bundle 14.

According to a further particularly advantageous aspect of the present invention, the titanium tube 14a and the zirconium coating layer 25 are preferably bonded together metallurgically, for example by hot-drawing, or through welding. In this way, a strong, stable and long-lasting link is obtained between the two metals, which makes it practically impossible for them to detach even when subjected to the most extreme operative conditions, thus ensuring continuous resistance to corrosion. This is made possible in particular thanks to the similar chemical/physical properties of titanium and zirconium (and of their alloys), which makes them compatible for this type of assembly. Advantageously, the hot-drawing or the welding of the tube according to the invention is realized by using per se known techniques.

A further advantage of the present invention with respect to the apparatuses according to the prior art is given by the fact that the arrangement of titanium or titanium alloy tubes 14a ensures a long-lasting and effective resistance to corrosion thereof also at their lower and upper ends. Indeed, such ends, going into the chambers 17 and 19, are particularly subjected to the corrosive attack of the process fluid (liquid and gaseous) present in such chambers.

For the purposes of the present invention, the parts outside of the tube bundle 14, and in particular the tube plates 15 and 16, are preferably made of titanium or titanium alloy or are coated (cladded) with a layer of titanium or titanium alloy, so as to ease the fixing of the tubes 14a with such tube plates. Just as an example, in accordance with the present invention, the upper and lower tube plates 15, 16 are made of carbon or stainless steel, coated on the outside with a layer of about 3-15 mm of titanium or titanium alloy.

In use, a process fluid is fed into the first chamber 17 of the exchanger 10 according to the present invention through the entry duct 20, from here descends along the inner wall of the tubes 14a of the tube bundle 14, without filling up, forming a thin film on it that leaves a consistent empty space at the center of the tubes themselves (see vertical axis B-B of figure 2). At the same time, an operating heat exchange fluid is fed into the second chamber 18 of the heat exchanger 10 through the upper entry duct 23, and circulates inside of it coming into contact with the outer wall of each single tube 14a of said tube bundle 14. The product coming out from the tubes 14a is collected in the third chamber 19 from where it is discharged to the outside of the heat exchanger 10 through the exit duct 21. In turn, the operating heat exchange fluid comes out from the second chamber 18 through the lower exit duct 22.

In the specific case of the example of figures 1-2 of a tube bundle stripper, with vertical tubes and with descending film, used in the high pressure and temperature synthesis section of an urea production plant, the process fluid comprises an aqueous urea solution, ammonium carbamate, ammonia and carbon dioxide, where carbamate and carbon dioxide are highly aggressive agents that notoriously exert a considerable corrosive action on the metallic surfaces with which they come into contact.

Advantageously, as seen above, such a corrosive action, which is particularly virulent inside the tubes of the tube bundle of such apparatus, is effectively neutralized by the arrangement of titanium or titanium alloy tubes, at least partially coated on the inside by a layer of zirconium or zirconium alloy.

The finding thus conceived is susceptible to further variants and modifications all within reach of the skilled person in the art and, as such, falling within the scope of protection of the finding itself, as defined by the following claims.

## Claims

1. Apparatus for treating highly corrosive agents, comprising a tube bundle (14) heat exchanger (10), structured to carry out a heat exchange between two fluids one of which is highly corrosive and flowing inside of said tube bundle (14), **characterized in that** said tube bundle (14) comprises at least one titanium or titanium alloy tube (14a), coated with a layer (25) of zirconium or zirconium alloy bonded to said tube (14a) metallurgically or through welding.

2. Apparatus according to claim 1, **characterized in that** said at least one titanium or titanium alloy tube (14a) is coated on the inside by said zirconium or zirconium alloy layer (25).

3. Apparatus according to claim 1, **characterized in that** said at least one titanium or titanium alloy tube (14a) has a thickness between 1.0 and 10 mm, and **in that** said zirconium or zirconium alloy coating layer (25) has a thickness between 0.3 and 2.0 mm.

4. Apparatus according to claim 1, **characterized in that** said at least one titanium or titanium alloy tube (14a) is only partially coated with said zirconium or zirconium alloy layer (25).

5. Apparatus according to claim 4, **characterized in that** said zirconium or zirconium alloy layer (25) coats solely an end portion (14b) of said heat exchange tube (14a).

6. Apparatus according to claim 3, **characterized in that** said zirconium or zirconium alloy layer (25) extends in said at least one titanium or titanium alloy tube (14a) starting from an entry end (26) towards an opposite end (27) thereof, for a portion between 5 and 30%.

7. Apparatus according to claim 1, **characterized in that** said at least one titanium or titanium alloy tube (14a) and said zirconium or zirconium alloy coating layer (25) are bonded together through hot-drawing.

8. Apparatus according to claim 1, **characterized in that** said heat exchanger (10) comprises respective upper and lower tube plates (15, 16) for supporting said tube bundle (14), said tube plates (15, 16) being made of titanium or titanium alloy, or being coated with a titanium or titanium alloy layer.

9. Apparatus according to claim 8, **characterized in that** said upper and lower tube plates (15, 16) are made of carbon or stainless steel, coated on the outside with a layer of 3-15 mm of titanium or titanium alloy.

10. An apparatus according to claim 1, which is a stripper for the decomposition of ammonium carbamate in an urea production plant.

11. An apparatus according to claim 1, which is a condenser for the condensation of ammonia and carbon dioxide into ammonium carbamate in an urea production plant.

## Patentansprüche

1. Vorrichtung zur Behandlung hochgradig korrosiver Stoffe, mit einem Rohrbündel-Wärmetauscher (14, 10), der so aufgebaut ist, um einen Wärmeaustausch zwischen zwei Fluiden auszuführen, von denen eines hochgradig korrosiv ist und innerhalb des Rohrbündels (14) fließt, **dadurch gekennzeichnet, dass** das Rohrbündel (14) mindestens ein Titan- oder Titanlegierungsrohr (14a) umfasst, das mit einer Schicht (25) aus Zirkon oder einer Zirkonlegierung beschichtet ist, die mit dem Rohr (14a) auf metallurgischem Weg oder durch Schweißen verbunden ist.

2. Vorrichtung nach Anspruch 1, **dadurch gekennzeichnet, dass** das mindestens eine Titan- oder Titanlegierungsrohr (14a) an der Innenseite mit der Zirkon- oder Zirkonlegierungsschicht (25) beschichtet ist.

3. Vorrichtung nach Anspruch 1, **dadurch gekennzeichnet, dass** das mindestens eine Titan- oder Titanlegierungsrohr (14a) eine Dicke zwischen 1,0 und 10 mm hat, und dass die Zirkon- oder Zirkonlegierungsbeschichtungsschicht (25) eine Dicke zwischen 0,3 und 2,0 mm hat.

4. Vorrichtung nach Anspruch 1, **dadurch gekennzeichnet, dass** das mindestens eine Titan- oder Titanlegierungsrohr (14a) nur teilweise mit der Zirkon- oder Zirkonlegierungsschicht (25) beschichtet ist.

5. Vorrichtung nach Anspruch 4, **dadurch gekennzeichnet, dass** mit der Zirkon- oder Zirkonlegierungsschicht (25) nur ein Endabschnitt (14b) des Wärmetauscherrohrs (14a) beschichtet ist.

6. Vorrichtung nach Anspruch 3, **dadurch gekennzeichnet, dass** sich die Zirkon- oder Zirkonlegierungsschicht (25) in dem mindestens einen Titan- oder Titanlegierungsrohr (14a) ausgehend von einem Eintrittsende (26) in Richtung zu einem entgegengesetzten Ende (27) von diesem um einen Teilbereich zwischen 5 und 30% erstreckt.

7. Vorrichtung nach Anspruch 1, **dadurch gekennzeichnet, dass** das mindestens eine Titan- oder Titanlegierungsrohr (14a) und die Zirkon- oder Zirkonlegierungsbeschichtungsschicht (25) durch Heißziehen miteinander verbunden sind.

8. Vorrichtung nach Anspruch 1, **dadurch gekennzeichnet, dass** der Wärmetauscher (10) eine jeweilige obere und untere Röhrenplatte (15, 16) aufweist, um das Rohrbündel (14) zu haltern, wobei die Röhrenplatten (15, 16) aus Titan oder einer Titanlegierung hergestellt sind, oder mit einer Titan- oder Titanlegierungsschicht beschichtet sind.

9. Vorrichtung nach Anspruch 8, **dadurch gekennzeichnet, dass** die obere und untere Röhrenplatte (15, 16) aus Kohlenstoffstahl oder rostfreiem Stahl hergestellt und auf der Außenseite mit einer 3 bis 15 mm dicken Schicht aus Titan oder einer Titanlegierung beschichtet sind.

10. Vorrichtung nach Anspruch 1, bei der es sich um einen Abscheider für die Zersetzung von Ammoniumcarbamat in einer Anlage zur Erzeugung von Harnstoff handelt.

11. Vorrichtung nach Anspruch 1, bei der es sich um einen Kondensator für die Kondensation von Ammoniak und Kohlendioxid zu Ammoniumcarbamat in einer Anlage zur Erzeugung von Harnstoff handelt.

## Revendications

1. Dispositif pour le traitement d'agents hautement corrosifs, comprenant un échangeur de chaleur (10) à faisceau de tubes (14), structuré pour assurer un échange de chaleur entre deux fluides dont l'un est hautement corrosif et circulant à l'intérieur dudit faisceau de tubes (14), **caractérisé en ce que** ledit faisceau de tubes (14) comprend au moins un tube en titane ou en alliage de titane (14a), revêtu d'une couche (25) de zirconium ou d'alliage de zirconium liée audit tube (14a) par procédé métallurgique ou par soudage.

2. Dispositif selon la revendication 1, **caractérisé en ce que** ledit au moins un tube en titane ou en alliage de titane (14a) est revêtu sur l'intérieur de ladite couche de zirconium ou d'alliage de zirconium (25).

3. Dispositif selon la revendication 1, **caractérisé en ce que** ledit au moins un tube en titane ou en alliage de titane (14a) a une épaisseur comprise entre 1,0 et 10 mm, et **en ce que** ladite couche de revêtement de zirconium ou d'alliage de zirconium (25) a une épaisseur comprise entre 0,3 et 2,0 mm.

4. Dispositif selon la revendication 1, **caractérisé en ce que** ledit au moins un tube en titane ou en alliage de titane (14a) n'est que partiellement revêtu de ladite couche de zirconium ou d'alliage de zirconium (25).

5. Dispositif selon la revendication 4, **caractérisé en ce que** ladite couche de zirconium ou d'alliage de zirconium (25) recouvre seulement une partie d'extrémité (14b) dudit tube d'échange de chaleur (14a).

6. Dispositif selon la revendication 3, **caractérisé en ce que** ladite couche de zirconium ou d'alliage de zirconium (25) s'étend dans ledit au moins un tube en titane ou en alliage de titane (14a) en commençant à partir d'une extrémité d'entrée (26) en direction d'une extrémité opposée (27) de celui-ci, sur une portion comprise entre 5 et 30 %.

7. Dispositif selon la revendication 1, **caractérisé en ce que** ledit au moins un tube en titane ou en alliage de titane (14a) et ladite couche de revêtement de zirconium ou d'alliage de zirconium (25) sont liés par étirage à chaud.

8. Dispositif selon la revendication 1, **caractérisé en ce que** ledit échangeur de chaleur (10) comprend des plaques tubulaires supérieure et inférieure respectives (15, 16) pour soutenir ledit faisceau de tubes (14), lesdites plaques tubulaires (15, 16) étant fabriquées en titane ou en alliage de titane, ou étant revêtues d'une couche de titane ou d'alliage de titane.

9. Dispositif selon la revendication 8, **caractérisé en ce que** lesdites plaques tubulaires supérieure et inférieure (15, 16) sont fabriquées en acier au carbone ou en acier inoxydable, revêtues sur l'extérieur d'une couche de 3à 15 mm de titane ou d'alliage de titane.

10. Dispositif selon la revendication 1, qui est une colonne d'extraction pour la décomposition de carbamate d'ammonium dans une installation de production d'urée.

11. Dispositif selon la revendication 1, qui est un condenseur pour la condensation d'ammoniac et de dioxyde de carbone en carbamate d'ammonium dans une installation de production d'urée.
